# EUROPEAN PATENT APPLICATION

(11) **EP 3 151 579 A1**
(43) Date of publication of application: **05.04.2017**
(21) Application number: 16813342.9
(22) Date of filing: 05.07.2016
(51) Int. Cl.: H04N 21/81, H04N 21/43, G09F 19/12, G09F 19/14

(54) **METHOD FOR INCLUDING ADVERTISING DESIGNS BY MEANS OF AN IMAGE PROCESSOR**

(30) Priority: 06.07.2015 ES 201530971
(71) Applicant: Market Sp'94, S.L., 08034 Barcelona (ES)
(72) Inventor: PALMEROLA FERNANDEZ, Javier, 08029 Barcelona (ES)
(74) Representative: Durán-Corretjer, S.L.P.
(86) International application number: PCT/ES2016/070501
(87) International publication number: WO 2017/005955

(57) **Abstract**

Method for incorporating advertising motifs into a broadcast of a sporting event by means of an image processor, comprising the steps of placing an anamorphic advertising device on the ground of a sports field, said device comprising an advertising motif; taking images using a camera; detecting, by means of an image processor, the advertising device in the image taken by the camera; inserting an advertising image into the aforementioned images in the area corresponding to the detected advertising device, and broadcasting the images.

## Description

The present invention relates to a method for incorporating virtual advertising into a broadcast of images of a sporting event.

Incorporating advertising images into the images of a broadcast of a sporting event is a known and conventional practice. This technique allows advertisements to be different in different territorial zones of the broadcast. In this way, for example, it is known to replace the advertising motifs on the raised barriers that delimit the field of play of a football pitch in the images of the broadcast. An image processor which modifies the images taken by the camera is used for this purpose. The image processor detects the barriers and incorporates the new advertising images to be broadcast before the broadcast is carried out. The new images replace the barriers in the images taken by the camera.

One problem relating to advertising during sporting events is that of the limited amount of space available for placing advertisements. This situation is made worse by the fact that it is not possible to obstruct the actions of the sportsmen. Furthermore, some regulations, such as FIFA regulations, prevent the incorporation of advertising images in transmitted images (virtual advertising) if these images replace real images of elements visible on the field that are not actually intended for advertisement.

An object of the present invention is to disclose a means for creating new surfaces for use in virtual advertising and which additionally facilitate incorporation of virtual advertising in new spaces.

The present invention uses analogue advertising devices for this purpose. These advertising devices are characterised in that they are positioned so as to lie on the ground, and so do not interfere with the sportsmen. These devices are used as a basis for incorporating the advertising motifs into the images of the broadcast. Furthermore, if use is made of analogue devices which can be deformed to make the advertising motif appear upright, the image processor can identify and replace the image far more easily and the regulations can be complied with.

More specifically, the present invention relates to a method for incorporating advertising motifs into a broadcast of a sporting event by means of an image processor, comprising the steps of:
- placing a preferably planar advertising device on the ground of the sports field, said device comprising an advertising motif;
- taking images using a camera;
- detecting, by means of the image processor, the advertising device in the image taken by the camera;
- inserting an advertising image into the aforementioned images in the area corresponding to the detected advertising device, and
- broadcasting the images.

The present invention provides a new means for incorporating virtual advertising while complying with FIFA regulations and without obstructing the players.

The aforementioned advertising device is preferably an anamorphic advertising device. This feature facilitates detection and replacement in the image of the advertising motif.

An advertising motif, the outline thereof, or both can be anamorphically deformed.

Alternatively, the advertising device can be non-anamorphic.

Preferably, the device comprises at least one zone having a mimetic image of the ground of the sports field on which said device is located.

More preferably, the mimetic image is an image of grass.

Preferably, the aforementioned zone having a mimetic image is located on the outermost periphery of the device.

Particularly preferably, the step of inserting an advertising image into the aforementioned images taken by the camera also comprises inserting a mimetic image of the ground of the sports field into the zones corresponding to the advertising device that are not covered by the inserted images.

The present invention also includes an advertising device to be placed on the ground of a sports field, which device comprises at least one zone having a mimetic image of the ground of the sports field.

Preferably, said zone is located on the outermost periphery of the device.

More preferably, the mimetic image is of grass.

Preferably, the device comprises an advertising motif having an anamorphic deformation.

Preferably too, an outline of the device is anamorphically deformed.

The anamorphic device can either be a substrate for receiving an advertising device, which is for example painted on or stuck on, or a digital display, for example, an LED display, a graphene display, or the like.

To better understand the present invention, drawings of an embodiment of the method thereof are included by way of explanatory but non-limiting example.
Fig. 1 is a perspective view of a sports field, specifically a football pitch.
Fig. 2 is a perspective view of the field from Fig. 1, an anamorphic advertising device having been placed on the ground of the sports field.
Fig. 3 is an image of the field and the anamorphic advertising device on the ground of the sports field.
Fig. 4 is an image of the field and a non-anamorphic advertising device on the ground of the sports field.
Fig. 5 shows the processed image in which, after having been placed in the image of the anamorphic advertising device, the advertising motif of the anamorphic advertising device has been replaced with another one for broadcast thereof.
Fig. 6 schematically shows a specific embodiment of a device according to the present invention and its use during the method of incorporating advertising motifs according to the present invention.
Fig. 7 shows another advertising device and its use in a specific embodiment of the method according to the present invention.

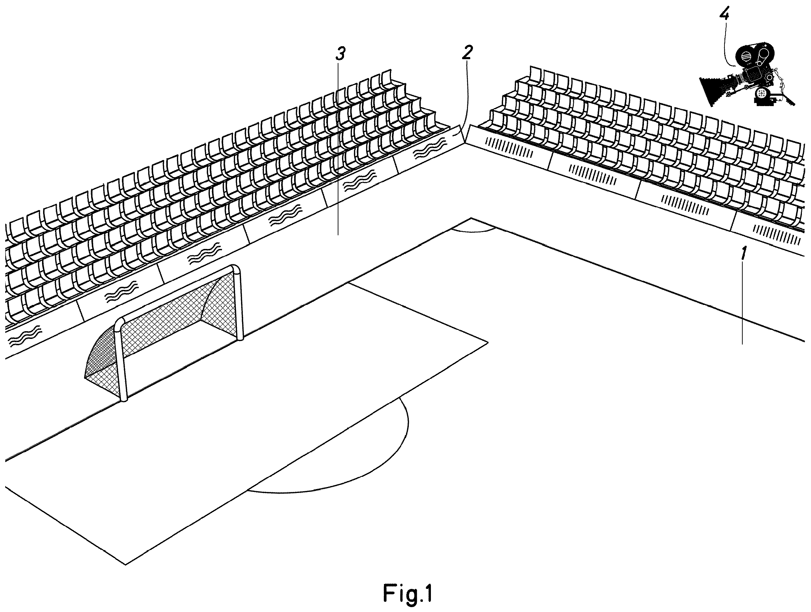

Fig. 1 to 4 give an example of the use of a method according to the present invention for creating virtual advertisements by incorporating images.

Fig. 1 shows a football pitch -1- having an advertising barrier -2- that delimits the playing field and a free zone -3- between the limits of play and the advertising barrier -2-.

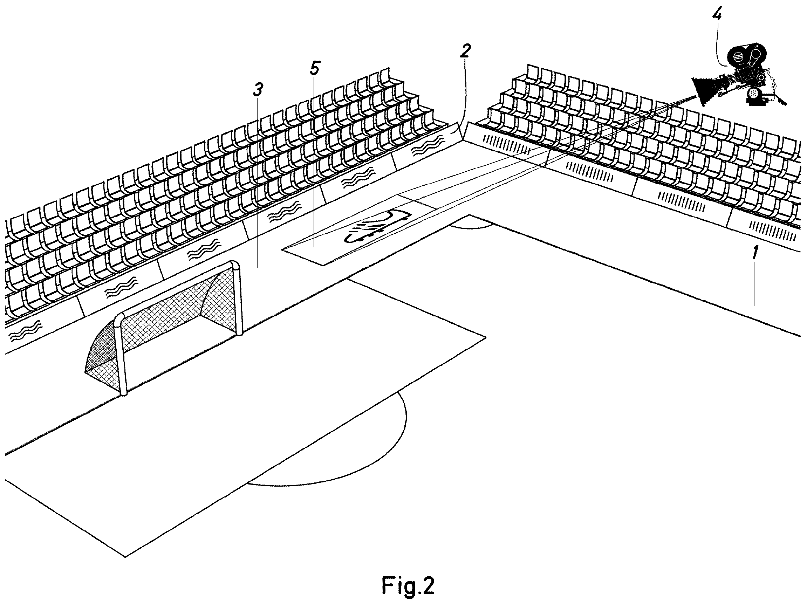

Fig. 2 shows how an anamorphic advertising device -5- of a known type is placed so as to lie on the ground in the free zone -3-. These devices are known in the technical field and are deformed so as to appear upright and without appearing deformed from a specific point of view, which in this case coincides with that of a camera -4- used for broadcasting the sporting event taking place on the playing field.

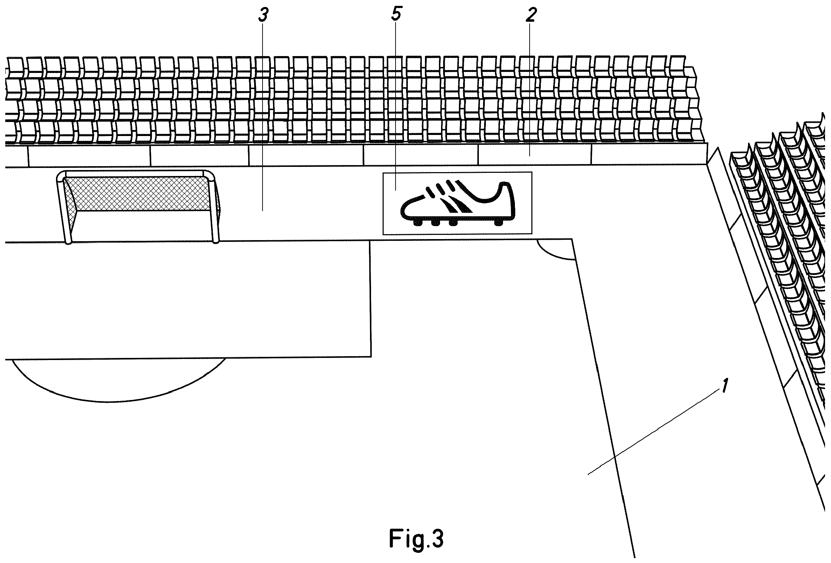

Fig. 3 is an image of the shots taken by the camera -4-. The image shows how the anamorphic device -5-appears upright and not deformed.

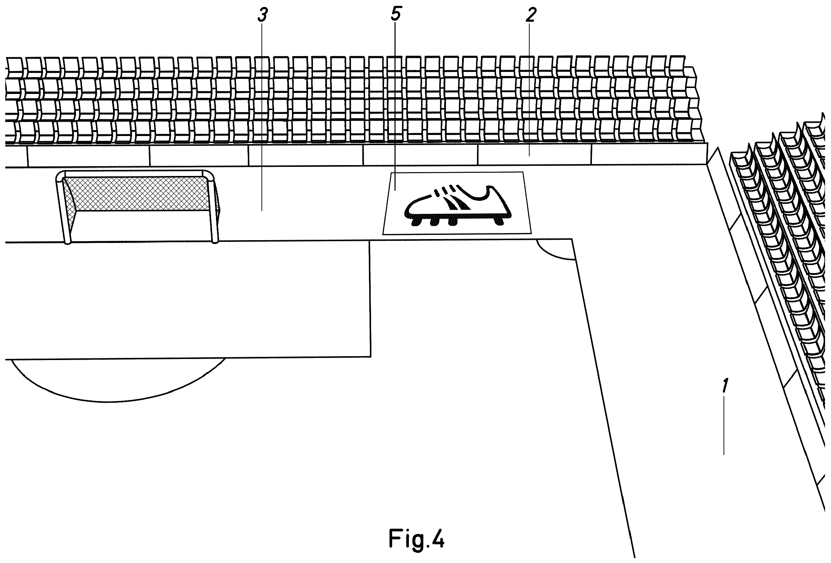

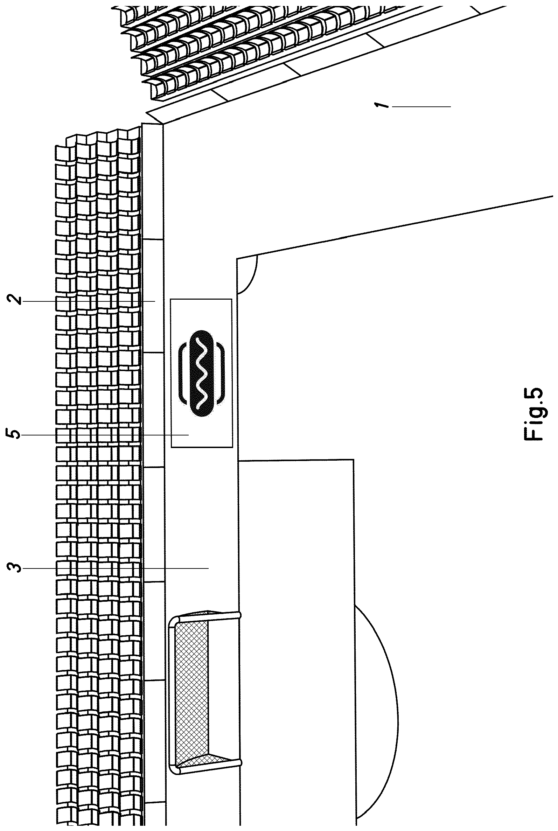

Fig. 5 shows a variant of the embodiment corresponding to Fig. 4 in which a non-anamorphic advertising device has been used. As can be seen in said figure, the device appears deformed from the point of view of the camera. This variant has the advantage that for spectators in a different location to that of the camera the advertising motif does not appear deformed to the extent that it is unrecognisable or illegible.

The images taken by the camera -4- are processed before they are broadcast. The advertising motif of the anamorphic advertising device -5- is placed in the images by means of an image recognition method, and a new advertising motif is incorporated in place of said advertising motif prior to the images being broadcast.

It is possible to carry out these operations in real time and without excessive delay to the broadcast by virtue of modern electronic hardware.

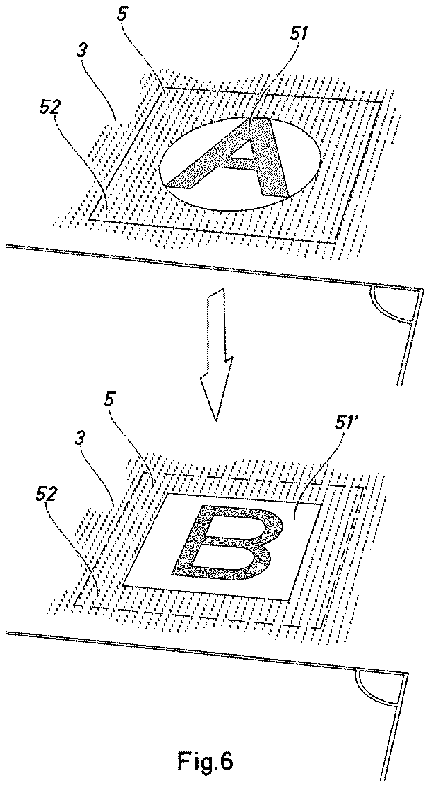

In the upper part of Fig. 6 there is an example of a device according to the present invention. An advertising device -5- on the ground in the free zone -3- of a pitch sports field is shown. The advertising device -5- comprises an anamorphically deformed advertising motif -51- and a peripheral zone -52-having an image that is mimetic with respect to the ground in the free zone -3- of the sports field (in this case, grass).

The advertising device -5- in the example has an outline that is also anamorphically deformed, although it could have another outline.

Fig. 6 demonstrates the advantage of the advertising device -5- comprising a zone -52- having a mimetic image: during the method according to the present invention, it is possible to replace the image of the advertising device for an image to be inserted -51'- in the broadcast without having to worry about the portion of the advertising device that is not covered by the image to be inserted -51-.

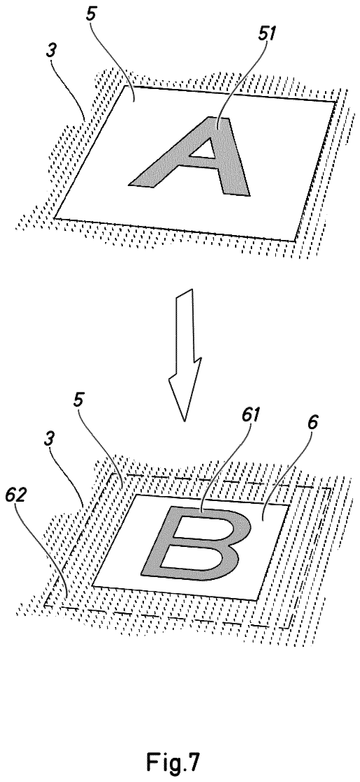

Fig. 7 demonstrates the same method when the advertising device -5- does not have a mimetised peripheral zone. If the image -6- to be inserted together with the advertising motif -61- substituting the real motif -51- at the time of broadcast is smaller or has a different shape, another image -62- that is mimetic with respect to the ground in the free zone -3- of the sports field must also be inserted in order to cover the portion of the advertising device -5- not covered by the image -62- to be inserted.

Although the invention has been described with respect to preferred embodiments, these should not be considered as limiting the invention, which will be defined by the broader interpretation of the following claims.

## Claims

1. Method for incorporating advertising motifs into a broadcast of a sporting event by means of an image processor, comprising the steps of:
- placing an advertising device on the ground of the sports field;
- taking images using a camera;
- detecting, by means of the image processor, the advertising device in the image taken by the camera;
- inserting an advertising image into the aforementioned images in the area corresponding to the detected advertising device, and
- broadcasting the images.

2. Method according to claim 1, **characterised in that** the advertising device is flat on the ground of the sports field.

3. Method according to either claim 1 or claim 2, **characterised in that** the advertising device located on the ground has an advertising motif.

4. Method according to any one of claims 1 to 3, **characterised in that** the advertising device is an anamorphic device.

5. Method according to claim 4, **characterised in that** the advertising motif of the advertising device is anamorphically deformed.

6. Method according to either claim 4 or claim 5, **characterised in that** the outline of the device is anamorphically deformed.

7. Method according to any one of claims 1 to 6, **characterised in that** the device comprises at least one zone having a mimetic image of the ground of the sports fields on which it is located.

8. Method according to claim 7, **characterised in that** the mimetic image is an image of grass.

9. Method according to either claim 7 or claim 8, **characterised in that** the aforementioned zone having a mimetic image is located on the outermost periphery of the device.

10. Method according to any one of claims 1 to 9, **characterised in that** the step of inserting an advertising image into the aforementioned images taken by the camera also comprises inserting a mimetic image of the ground of the sports field into the zones corresponding to the advertising device that are not covered by the inserted images.

11. Advertising device to be placed on the ground of a sports field, **characterised in that** it has at least one zone having a mimetic image of the ground of the sports field.

12. Device according to claim 10, **characterised in that** said zone is located on the outermost periphery of the device.

13. Device according to either claim 11 or claim 12, **characterised in that** the mimetic image is of grass.

14. Device according to any one of claims 11 to 13, **characterised in that** the device comprises an advertising motif having an anamorphic deformation.

15. Device according to any one of claims 11 to 14, **characterised in that** an outline of the device is anamorphically deformed.
